# EUROPÄISCHE PATENTSCHRIFT

(11) **EP 4 357 084 B1**
(45) Veröffentlichungstag und Bekanntmachung des Hinweises auf die Patenterteilung: **29.10.2025**
(21) Anmeldenummer: 24162350.3
(22) Anmeldetag: 27.07.2017
(51) Int. Cl.: B25J 9/04, B25J 9/10, B25J 9/12

(54) **KNICKARMROBOTER**
ARTICULATED ROBOT
ROBOT À BRAS ARTICULÉ

(30) Priorität: 04.10.2016 DE 102016118785
(43) Veröffentlichungstag der Anmeldung: 24.04.2024
(62) Teilanmeldung aus: 17751045.0
(73) Patentinhaber: Broetje-Automation GmbH, 26180 Rastede (DE)
(72) Erfinder: Logemann, Torsten, 26215 Wiefelstede (DE)
(74) Vertreter: Gottschald Patentanwälte Partnerschaft mbB

(56) Entgegenhaltungen:
- EP-A1- 0 243 362
- DE-A1- 102013 018 857
- DE-A1- 3 231 249

## Beschreibung

Die Erfindung betrifft einen Knickarmroboter mit einer seriellen Kinematik zur Positionierung eines Endeffektors.

In den Druckschriften DE 32 31 249 A1 und DE 10 2013 018 857 A1 sind jeweils Handhabungsvorrichtungen beschrieben.

Bei der Handhabungsvorrichtung aus der DE 32 31 249 A1 handelt es sich um eine solche mit gemischtem Reihen-Parallelantrieb, bei der die von einem und demselben Motor angetriebenen Bewegungen zu unterschiedlichen Zeiten erfolgen, während die von unterschiedlichen Motoren angetriebenen Bewegungen gleichzeitig ausgeführt werden können. Die Handhabungsvorrichtung weist eine Teilkinematik zur Verstellung von zwei durch ein Robotergelenk verbundenen Robotergliedern zueinander auf, die einen Linearantrieb mit einem entlang einer Linearachse verstellbaren Antriebselement und eine Koppel mit zwei entlang der Koppelerstreckung voneinander beabstandeten Koppelgelenken aufweist, wobei der Linearantrieb an dem ersten Roboterglied angeordnet ist und die Koppel einerseits an dem Antriebselement und andererseits an dem zweiten Roboterglied, beabstandet von der geometrischen Achse des Robotergelenks, angelenkt ist.

Der in Rede stehende Knickarmroboter findet in verschiedenen Bereichen der Automatisierungstechnik Anwendung. Vorliegend stehen Automatisierungsaufgaben betreffend die Herstellung von Strukturbauteilen von Luftfahrzeugen im Vordergrund, bei denen am Endeffektor Prozesskräfte auftreten.

Der Positionierung des Endeffektors unter Prozesskräften stellt besondere Anforderungen an die Kinematik des Knickarmroboters. Ein die Positioniergenauigkeit beeinflussender Faktor ist das toleranzbedingte Spiel in der Kinematik des Knickarmroboters, das sich durch die Vorgabe enger Toleranzbereiche, durch ein Verspannen von Antriebsachsen o. dgl. reduzieren lässt. Ein anderer Aspekt, der hier im Vordergrund steht, ist die Steifigkeit der Kinematik des Knickarmroboters. Bei unzureichender Steifigkeit der Kinematik können Prozesskräfte zu einer ungewünschten Abweichung in der Positionierung des Endeffektors führen.

Die Steifigkeit der Kinematik des Knickarmroboters wird durch den Antriebsstrang, der die Verstellung der Kinematik bewirkt, wesentlich bestimmt. Der Antriebsstrang, der regelmäßig mehrere Teilstränge aus einem Antriebsmotor und mindestens einem dem Antriebsmotor nachgeschalteten Getriebe aufweist, muss den Prozesskräften derart entgegenwirken, dass sich möglichst geringe Abweichungen in der Positionierung des Endeffektors ergeben. Dies wiederum stellt zusätzliche Anforderungen an die Steifigkeit des Antriebsstrangs insgesamt.

Der Erfindung liegt das Problem zugrunde, einen Knickarmroboter mit einer seriellen Kinematik zur Positionierung eines Endeffektors anzugeben, der eine hohe Steifigkeit im Hinblick auf am Endeffektor auftretende Prozesskräfte aufweist.

Die vorliegende Erfindung löst das Problem durch einen Knickarmroboter gemäß Anspruch 1.

Zunächst wird davon ausgegangen, dass die Kinematik des Knickarmroboters mindestens eine Teilkinematik mit einem Robotergelenk, mit einem dem Robotergelenk vorgelagerten Roboterglied und einem dem Robotergelenk nachgelagerten Roboterglied aufweist.

Wesentlich ist nun die grundsätzliche Überlegung, dass durch die Ausstattung des Antriebsstrangs mit einem Linearantrieb und einer dem Linearantrieb zugeordneten Koppel bei geeigneter Auslegung erreicht werden kann, dass die auf den Endeffektor einwirkenden Prozesskräfte, die ein Drehmoment auf das betreffende Robotergelenk ausüben, nur vergleichsweise geringe Kräfte auf den Linearantrieb entlang dessen Linearachse erzeugen. Diese Auslegung ist vorschlagsgemäß so getroffen, dass die mindestens eine Teilkinematik einen Linearantrieb mit einem entlang einer Linearachse verstellbaren Antriebselement und eine Koppel mit zwei entlang der Koppelerstreckung voneinander beabstandeten Koppelgelenken aufweist, wobei der Linearantrieb an einem ersten Roboterglied von den obigen beiden vorgelagerten und nachgelagerten Robotergliedern der Teilkinematik angeordnet ist und wobei die Koppel einerseits an dem Antriebselement des Linearantriebs und andererseits an dem zweiten, verbleibenden Roboterglied von den obigen beiden vorgelagerten und nachgelagerten Robotergliedern der Teilkinematik, beanstandet von dem Robotergelenk der Teilkinematik, angelenkt ist. Dabei ist es vorgesehen, dass ein gemeinschaftliches Roboterglied sowohl der ersten als auch der zweiten Teilkinematik zugeordnet ist, an dem die Linearantriebe (6.4, 7.4) beider Teilkinematiken (6, 7) angeordnet sind.

Bei den besonders bevorzugten Ausgestaltungen gemäß den Ansprüchen 2 bis 4 handelt es sich bei dem Linearantrieb um einen Spindel-Spindelmutter-Antrieb, wobei bei den weiter bevorzugten Ausgestaltungen gemäß den Ansprüchen 3 und 4 die geometrische Spindelachse der Spindel ortsfest an dem ersten Roboterglied der Teilkinematik gelegen ist. Dies vereinfacht die Lagerung der Spindel und senkt somit die Herstellkosten.

Von besonderer Bedeutung ist vorliegend die bevorzugte Ausgestaltung gemäß Anspruch 5, nach der das Antriebselement der Längsführung an dem ersten Roboterglied in einer Variante separat von dem Linearantrieb in einer Führungsrichtung längsgeführt ist. Damit lässt sich bei einem obigen Spindel-Spindel mutter-Antrieb erreichen, dass jegliche am Endeffektor angreifende Prozesskräfte keine resultierende Kraft in einer Richtung quer zu der geometrischen Spindelachse auf die Spindel ausüben. Dies bedeutet, dass eine Positionierungenauigkeit, die auf eine eventuelle Verbiegung der Spindel zurückgehen könnte, nicht auftritt.

Im statischen Zustand der Teilkinematik, also bei festgesetztem Linearantrieb, bilden das Robotergelenk und die beiden Koppelgelenke zusammen mit der Koppel und den jeweiligen Abschnitten der Roboterglieder, die zwischen den Koppelgelenken und dem Robotergelenk gelegen sind, eine Anordnung nach Art eines Stabdreiecks aus, dessen Ecken durch das Robotergelenk und durch die Koppelgelenke definiert sind, wobei die Dreiecksfläche quer zu der geometrischen Achse des Robotergelenks ausgerichtet ist.

Die weiter bevorzugten Ausgestaltungen gemäß den Ansprüchen 9 bis 11 betreffen Weiterbildungen der beiden Teilkinematiken. Grundsätzlich können auch mehr als zwei vorschlagsgemäße Teilkinematiken vorgesehen sein, die selbstredend unterschiedlich parametriert sein können.

Im Folgenden wird die Erfindung anhand einer lediglich ein Ausführungsbeispiel darstellenden Zeichnung näher erläutert. In der Zeichnung zeigt
- Fig. 1: einen vorschlagsgemäßen Knickarmroboter in einer Seitenansicht,
- Fig. 2: das Kinematikschema des Knickarmroboters gemäß Fig. 1 und
- Fig. 3: den Knickarmroboter gemäß Fig. 1, jeweils in einer perspektivischen Ansicht, a) in Blickrichtung IIIa und b) in Blickrichtung IIIb.

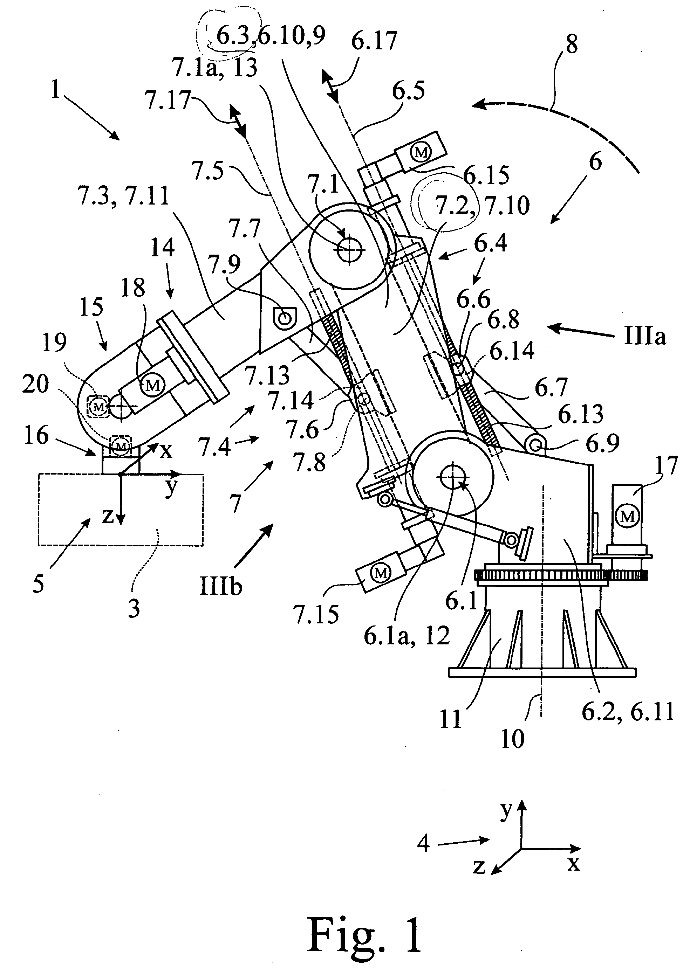

Der in der Zeichnung dargestellte Knickarmroboter 1 ist mit einer seriellen Kinematik 2 zur Positionierung eines Endeffektors 3 ausgestattet. In Fig. 1 ist ein Bezugskoordinatensystem 4 dargestellt, relativ zu dem der Endeffektor 3, insbesondere ein Werkzeugkoordinatensystem 5 am Endeffektor 3, positionierbar ist.

Die Kinematik 2 des Knickarmroboters 1 umfasst vorliegend mindestens eine Teilkinematik 6, 7, hier und vorzugsweise genau zwei vorschlagsgemäße Teilkinematiken 6, 7. Die beiden Teilkinematiken 6, 7 sind von grundsätzlich identischer Struktur, können jedoch unterschiedlich parametriert sein. Dies ergibt sich beispielsweise aus der Darstellung gemäß Fig. 1.

Im Folgenden wird in erster Linie die erste Teilkinematik 6 erläutert. Alle diesbezüglichen Ausführungen gelten für die zweite Teilkinematik 7 entsprechend. Insbesondere sind alle für die erste Teilkinematik erläuterten Merkmale und Vorteile auf die zweite Teilkinematik 7 und umgekehrt anwendbar.

Die Teilkinematik 6 ist mit einem Robotergelenk 6.1, mit einem dem Robotergelenk 6.1 vorgelagerten Roboterglied 6.2 und einem dem Robotergelenk 6.1 nachgelagerten Roboterglied 6.3 ausgestattet. Die Begriffe "vorgelagert" und "nachgelagert" sind auf eine Vorwärtsrichtung 8, die entlang der seriellen Kinematik 2 auf den Endeffektor 3 zuläuft, bezogen. Die beiden Roboterglieder 6.2 und 6.3 sind über das Robotergelenk 6.1 miteinander schwenkgekoppelt.

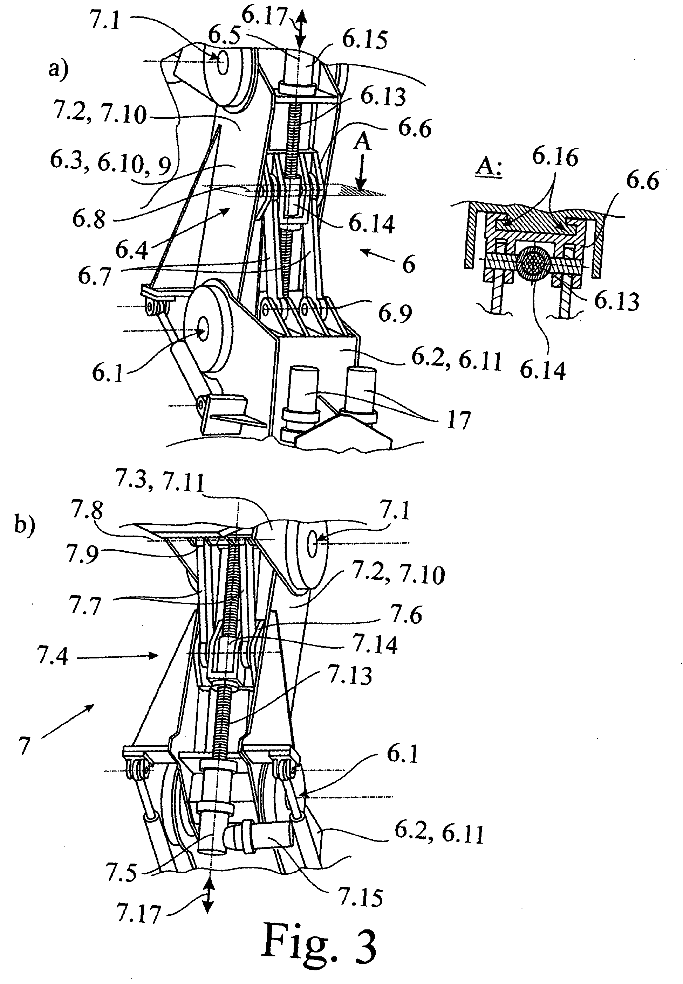

Die Teilkinematik 6 weist zur Verstellung der Roboterglieder 6.2, 6.3 zueinander einen Linearantrieb 6.4 mit einem entlang einer Linearachse 6.5 verstellbaren Antriebselement 6.6 sowie eine Koppel 6.7 mit zwei entlang der Koppelerstreckung voneinander beabstandeten Koppelgelenken 6.8, 6.9 auf. Die Koppel 6.7 ist hier als doppelte Koppel mit zwei parallel verlaufenden Einzelkoppeln ausgestaltet, wie in Fig. 3a gezeigt ist. Mit "Koppelerstreckung" ist vorliegend die Längserstreckung der Koppel 6.7 gemeint.

Der Linearantrieb 6.4 ist an einem ersten Roboterglied 6.10 der Teilkinematik 6 angeordnet. Dabei ist das erste Roboterglied 6.10 eines der beiden vorgelagerten und nachgelagerten Roboterglieder 6.2 und 6.3.

Die Koppel 6.7 ist einerseits an dem Antriebselement 6.6 des Linearantriebs 6.4 und andererseits an dem zweiten, verbleibenden Roboterglied 6.11 der Teilkinematik 6 angeordnet, und zwar um einen Abstand 6.12 beabstandet von der geometrischen Achse 6.1a des Robotergelenks 6.1 der Teilkinematik 6. Dabei ist das zweite Roboterglied 6.11 das andere der beiden vorgelagerten und nachgelagerten Roboterglieder 6.2 und 6.3.

Aus dem obigen ergibt sich, dass eine Verstellung des in Fig. 1 dargestellten Antriebselements 6.6 am Roboterglied 6.3 nach oben eine entsprechende Verstellung des Roboterglieds 6.3 im Uhrzeigersinn bewirkt, während eine Verstellung des Antriebselements 6.6 am Roboterglied 6.3 nach unten eine entsprechende Verstellung des Roboterglieds 6.3 entgegen dem Uhrzeigersinn erzeugt.

Die zweite Teilkinematik 7 ist entsprechend aufgebaut und weist ein Robotergelenk 7.1, ein vorgelagertes Roboterglied 7.2, ein nachgelagertes Roboterglied 7.3, einen Linearantrieb 7.4, dessen Antriebselement 7.6 entlang der Linearachse 7.5 verstellbar ist, eine Koppel 7.7 mit zwei Koppelgelenken 7.8 und 7.9, ein erstes Roboterglied 7.1 und ein zweites Roboterglied 7.11 sowie einen entsprechenden Abstand zwischen dem Koppelgelenk 7.8 und dem Robotergelenk 7.1 auf. Die Funktionsweise der zweiten Teilkinematik 7 entspricht der Funktionsweise der ersten Teilkinematik 6, so dass eine Verstellung des Antriebselements 7.6 in Fig. 1 nach oben eine entsprechende Verstellung des Robotergliedes 7.3 im Uhrzeigersinn und eine Verstellung des Antriebselements 7.6 in Fig. 1 nach unten eine entsprechende Verstellung des Robotergliedes 7.3 entgegen dem Uhrzeigersinn erzeugt.

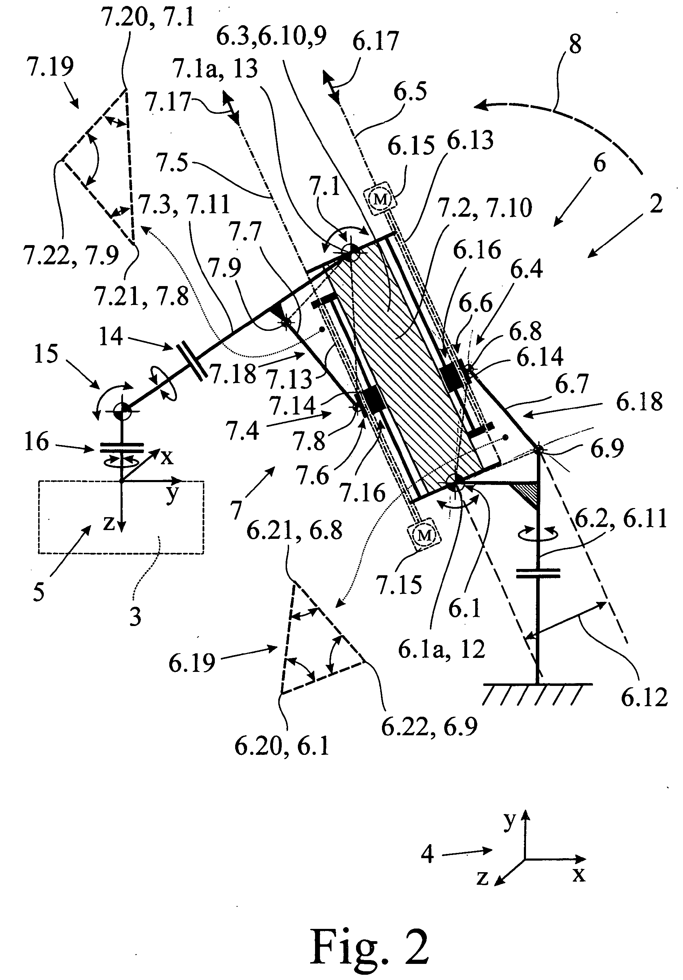

Fig. 2 zeigt die Kinematik 2 des vorschlagsgemäßen Knickarmroboters 1 in einer schematischen Darstellung. Hier wird deutlich, dass sich das Robotergelenk 6.1, die beiden Koppelgelenke 6.8, 6.9 zusammen mit der Koppel 6.7 und den jeweiligen Abschnitten der Roboterglieder 6.2, 6.3, die zwischen den Koppelgelenken 6.8, 6.9 und dem Robotergelenk 6.1 gelegen sind, sowie zusammen mit dem Linearantrieb 6.4 eine Art Schubkurbelkinematik bildet. Dabei handelt es sich bei der Kurbel gewissermaßen um den Abschnitt des Robotergliedes 6.2, der zwischen dem den Linearantrieb 6.4 abgewandten Koppelgelenk 6.9 und dem Robotergelenk 6.1 gelegen ist.

Bei dem dargestellten und insoweit bevorzugten Ausführungsbeispiel ist der Linearantrieb 6.4 ein Spindel-Spindelmutter-Antrieb mit einer Spindel 6.13 und einer Spindelmutter 6.14, wobei das Antriebselement 6.6 die Spindelmutter 6.14 oder die Spindel 6.13, hier und vorzugsweise die Spindelmutter 6. 14, umfasst.

In besonders bevorzugter Ausgestaltung ist das System aus Spindel 6.13 und Spindelmutter 6.14 als Kugelrollspindelsystem oder als Planetenrollgewindetriebsystem ausgestaltet. Speziell mit dem Planetenrollengewindetriebsystem lassen sich hohe Lasten mit hoher Genauigkeit verstellen.

Ein speziell herstellungstechnisch interessanter Aspekt bei dem dargestellten Knickarmroboter 1 ist die Tatsache, dass die Spindel 6.13 der Teilkinematik 6 so an dem ersten, den Linearantrieb 6.4 aufweisenden Roboterglied 6.10 der Teilkinematik 6 gelagert ist, dass die geometrische Spindelachse 6.13a an dem ersten Roboterglied 6.10 der Teilkinematik 6 ortsfest gelegen ist. Im Einzelnen ist es hier und vorzugsweise so, dass die Spindel 6.13 axial fest, aber um die axiale Spindelachse 6.13a drehbar an dem ersten Roboterglied 6.10 der Teilkinematik 6 gelagert ist, wobei die Spindelmutter 6.14 axial verlagerbar, aber bezogen auf die geometrische Spindelachse 6.13a drehfest an dem ersten Roboterglied 6.10 der Teilkinematik 6 gelagert ist. Dabei ist weiter vorzugsweise ein Spindelantrieb 6.15 zum Antrieb der Spindel 6.13 vorgesehen, der in besonders bevorzugter Ausgestaltung als Servoantrieb, also als geregelter Antrieb, ausgestaltet ist. Auch hinsichtlich der Montage des Spindelantriebs 6.15 ist es vorteilhaft, dass die Spindel 6.14, wie oben angesprochen, an dem ersten Roboterglied 6.10 der Teilkinematik 6 angeordnet ist.

Die obigen Ausführungen zu der ersten Teilkinematik 6 betreffend die Ausgestaltung des Linearantriebs 6.4 als Spindel-Spindelmutter-Antrieb gelten für die zweite Teilkinematik 7 entsprechend. Auch hier sind entsprechend die Komponenten Spindel 7.13, Spindelmutter 7.14 und Spindelantrieb 7.15 vorgesehen, die in obiger Weise miteinander wechselwirken.

An dem ersten Roboterglied 6.10 der Teilkinematik 6 ist eine Längsführung 6.16 angeordnet, mittels der das Antriebselement 6.6 an dem ersten Roboterglied 6.10 in einer Führungsrichtung 6.17 längsgeführt ist. Die Längsführung 6.16 ist hier und vorzugsweise separat von dem Linearantrieb 6.4 ausgestaltet. Eine Führung in diesem Sinne sorgt nicht nur für die Einhaltung der Bewegungsrichtung des Antriebselements 6.6 entlang der Führungsrichtung 6.17, sondern verhindert auch das Abheben des Antriebselements 6.6 von der Führung. Dabei ist es in besonders bevorzugter Ausgestaltung vorgesehen, dass die Längsführung 6.16 Führungskräfte auf das Antriebselement 6.6 ausübt, die sowohl quer zu der geometrischen Achse 6.1a des Robotergelenks 6.1 als auch quer zu der Führungsrichtung 6.17 ausgerichtet sind. Hier und vorzugsweise ist es sogar so, dass die Längsführung 6.16 Führungskräfte in allen Richtungen quer zu der Führungsrichtung 6.17 auf das Antriebselement 6.6 ausübt. Hier und vorzugsweise handelt es sich um die Längsführung 6.16 um eine Flachführung. Alternativ kann es sich bei der Längsführung auch um eine Schwalbenschwanzführung oder um eine Prismenführung handeln.

Die zweite Teilkinematik 7 ist mit einer entsprechenden Längsführung 7.16 mit zugeordneter Führungsrichtung 7.17 ausgestattet, die wiederum funktionsgleich zu der erläuterten Längsführung 6.16 der ersten Teilkinematik 6 ist.

Die Vorteilhaftigkeit der vorschlagsgemäßen Kinematik 2 lässt sich am besten bei der Betrachtung des statischen Zustands der betreffenden Teilkinematik 6, also bei festgelegtem Linearantrieb 6.4, erkennen. Wesentlich ist dabei, dass für den statischen Zustand der Teilkinematik 6 das Robotergelenk 6.1 und die beiden Koppelgelenke 6.8, 6.9 zusammen mit der Koppel 6.7 und den jeweiligen Abschnitten der Roboterglieder 6.10, 6.11, die zwischen den Koppelgelenken 6.8, 6.9 und dem Robotergelenk 6.1 gelegen sind, eine Anordnung nach Art eines Stabdreiecks 6.18 ausbilden. Die dem Stabdreieck 6.18 zugeordneten Kraftwirkungslinien bilden ein Kraftwirkungsdreieck 6.19 aus, dessen Ecken durch das Robotergelenk 6.1 und durch die Koppelgelenke 6.8, 6.9 definiert sind. Eine besonders stabile Anordnung ergibt sich dadurch, dass dessen Innenwinkel in einem Arbeitsbereich des Knickarmroboters 1, vorzugsweise stets, jeweils größer als 15°, vorzugsweise größer als 20°, weiter vorzugsweise größer als 30°, sind. Alternativ oder zusätzlich ist es in diesem Sinne vorgesehen, dass der Innenwinkel an dem Koppelgelenk 6.9, das dem Antriebselement 6.6 abgewandt ist, in einem Arbeitsbereich des Knickarmroboters 1, vorzugsweise stets, weniger als 150°, vorzugsweise weniger als 140°, weiter vorzugsweise weniger als 120° und weiter vorzugsweise weniger als 100° beträgt.

Alle Ausführungen zu der ersten Kinematik 6 betreffend das Stabdreieck 6.18 gelten für die zweite Teilkinematik 7 entsprechend, die ebenfalls eine Anordnung nach Art eines Stabdreiecks 7.18 ausbildet. Entsprechend zeigt die zweite Teilkinematik 7 neben dem Stabdreieck 7.18 ein Kraftwirkungsdreieck 7.19, das die Ecken 7.20, 7.21 und 7.22 aufweist.

Hier und vorzugsweise ist es so, dass die zweite Teilkinematik 7 der ersten Teilkinematik 6 nachgelagert ist, wie am besten der Darstellung gemäß Fig. 1 zu entnehmen ist. Hier ist es so, dass das nachgelagerte Roboterglied 6.3 der ersten Teilkinematik 6 gleichzeitig das vorgelagerte Roboterglied 7.2 der zweiten Teilkinematik 7 ist, so dass dieses Roboterglied ein gemeinschaftliches Roboterglied 9 der beiden Teilkinematiken 6, 7 bereitstellt. Ferner sind die Linearantriebe 6.4, 7.4 beider Teilkinematiken 6, 7 an dem gemeinschaftlichen Roboterglied 9 angeordnet. Entsprechend ist es hier und vorzugsweise vorgesehen, dass die Spindeln 6.13, 7.13, die Spindelmuttern 6.14, 7.14 und die Spindelantriebe 6.15, 7.15 jeweils an dem gemeinschaftlichen Roboterglied 9 angeordnet sind.

Entsprechend ist es, wie der Darstellung gemäß Fig. 1 weiter zu entnehmen ist, vorzugsweise vorgesehen, dass das erste, den Linearantrieb 6.4 aufweisende Roboterglied 6.10 der ersten Teilkinematik 6 gleichzeitig das erste, den Linearantrieb 7.4 aufweisende Roboterglied 7.10 der zweiten Teilkinematik 7 ist und somit das gemeinschaftliche Roboterglied 9 der beiden Teilkinematiken 6, 7 bereitstellt.

Das erste, den Linearantrieb 6.4 aufweisende Roboterglied 6.10 der ersten Teilkinematik 6 ist dem zweiten Roboterglied 6.11 der ersten Teilkinematik 6 nachgelagert. Bei dem ersten Roboterglied 6.10 handelt es sich also um das oben angesprochene, nachgelagerte Roboterglied 6.3 der ersten Teilkinematik 6, während es sich bei dem zweiten Roboterglied 6.11 um das oben angesprochene, vorgelagerte Roboterglied 6.2 der ersten Teilkinematik 6 handelt.

Andersherum ist es bei der zweiten Teilkinematik 7 vorgesehen, dass das erste, den Linearantrieb 7.4 aufweisende Roboterglied 7.10 dem zweiten Roboterglied 7.11 vorgelagert ist. Hier handelt es sich bei dem ersten Roboterglied 7.10 also um das im obigen Sinne vorgelagerte Roboterglied 7.2, während es sich bei dem zweiten Roboterglied 7.11 um das oben angesprochene, nachgelagerte Roboterglied 7.3 handelt.

Im Ergebnis bedeutet dies, dass die erste Teilkinematik 6 gewissermaßen umgekehrt zu der zweiten Teilkinematik 7 betrieben wird, wodurch sich u.a. die in Fig. 1 gezeigte, besonders kompakte Bauform ergibt. Die obige Kompaktheit wird dadurch weiter unterstützt, dass die Linearachsen 6.5, 7.5 der beiden Teilkinematiken 6, 7 beabstandet voneinander, jedoch parallel zueinander ausgerichtet sind.

Die geometrischen Achsen 6.1a und 7.1a der beiden Robotergelenke 6.1 und 7.1 sind hier und vorzugsweise parallel zueinander ausgerichtet. Dies erlaubt eine relativ große Reichweite des Knickarmroboters 1 in der in Fig. 1 gezeigten X-Richtung des Bezugskoordinatensystems 4.

Die beiden Linearachsen 6.5, 7.5 der beiden Teilkinematiken 6, 7 erstrecken sich weiter vorzugsweise parallel zu einer Verbindungslinie zwischen den geometrischen Achsen 6.1a und 7.1a der beiden Robotergelenke 6.1 und 7.1, wobei sich diese Verbindungslinie quer zu den beiden Roboterachsen 6.1a und 7.1a erstreckt. Diese zueinander parallele Ausrichtung lässt sich fertigungstechnisch besonders einfach umsetzen.

Aus der in Fig. 1 dargestellten Situation heraus bewirkt nun eine Prozesskraft in negativer Z-Richtung des Werkzeugkoordinatensystems 5 ein Drehmoment um das Robotergelenk 7.1 der zweiten Teilkinematik 7, das über die Koppel 7.7 abgestützt wird. Durch die Ausbildung des obigen Stabdreiecks 7.18 wird über die Koppel 7.7 nur ein vergleichsweise geringer Kraftanteil über das Antriebselement 7.6 in Richtung der Linearachse 7.5 in den Linearantrieb 7.4 eingeleitet, so dass der Linearantrieb 7.4 eine entsprechend geringe Gegenkraft aufwenden muss, um eine hohe Steifigkeit zu garantieren. Der verbleibende Kraftanteil quer zu der Linearachse 7.5 wird in die Längsführung 7.16 eingeleitet und erzeugt insoweit keine ungewünschten Verformungen.

Gleichzeitig bewirkt die obige Prozesskraft in negativer Z-Richtung des Werkzeugkoordinatensystems 5 ein Drehmoment um das Robotergelenk 6.1 der ersten Teilkinematik 6, das über die Koppel 6.7 abgestützt wird. Durch die Ausbildung des obigen Stabdreiecks 6.18 wird über die Koppel 6.7 nur ein vergleichsweise geringer Kraftanteil über das Antriebselement 6.6 in Richtung der Linearachse 6.5 in den Linearantrieb 6.4 eingeleitet, so dass der Linearantrieb 6.4 wiederum eine entsprechend geringe Gegenkraft aufwenden muss, um eine hohe Steifigkeit zu garantieren. Der verbleibende Kraftanteil quer zu der Linearachse 6.5 wird wiederum in die Längsführung 6.16 eingeleitet und erzeugt auch insoweit keine ungewünschten Verformungen.

Hier wird deutlich, dass der Existenz der Längsführungen 6.16 und 7.16 für die resultierende Steifigkeit des Knickarmroboters 1 insgesamt besondere Bedeutung zukommt.

Der vorschlagsgemäße Knickarmroboter 1 ist vorzugsweise als sechsachsiger Knickarmroboter ausgestaltet. Dabei ist es so, dass es sich bei der ersten geometrischen Positionierachse 10 um eine Achse in Y-Richtung des Bezugskoordinatensystems 4 handelt. Das Roboterglied 6.2 ist gegenüber einem Grundkörper 11 um die geometrische Positionierachse 10 schwenkbar. Die zweite Positionierachse 12 und die dritte Positionierachse 13 werden von den geometrischen Achsen 6.1a, 7.1a der Robotergelenke 6.1, 7.1 bereitgestellt. An das Roboterglied 7.3 schließen sich noch in an sich üblicher Weise eine vierte, eine fünfte und eine sechste Positionierachse 14, 15, 16 an, die in der Zeichnung nur angedeutet sind und denen für die vorschlagsgemäße Lehre eine nur untergeordnete Bedeutung zukommt.

Der ersten Positionierachse 10 und den vierten, fünften und sechsten Positionierachsen 14, 15, 16 sind Achsantriebe 17-20 zugeordnet. Die Achsantriebe 17-20 und/oder die Spindelantriebe 6.15, 7.15 können zur Vermeidung eines toleranzbedingten Spiels zumindest zum Teil mit zwei Antriebsmotoren ausgestattet sein, die stets geringfügig gegeneinander verspannt sind. Andere Alternativen für die Reduzierung toleranzbedingten Spiels sind grundsätzlich denkbar.

Der vorschlagsgemäße Knickarmroboter 1 wird vorzugsweise im Rahmen der Durchführung von Automatisierungsaufgaben betreffend die Herstellung von Strukturbauteilen von Luftfahrzeugen eingesetzt. Entsprechend handelt es sich bei dem Endeffektor 3 vorzugsweise um eine Nieteinheit, um eine Handhabungseinheit oder um eine Faserlegeeinheit. Andere Ausgestaltungen des Endeffektors 3 sind denkbar.

## Patentansprüche

1. Knickarmroboter mit einer seriellen Kinematik (2) zur Positionierung eines Endeffektors (3), wobei die Kinematik (2) mindestens eine Teilkinematik (6, 7) mit einem Robotergelenk (6.1), mit einem dem Robotergelenk (6.1) vorgelagerten Roboterglied (6.2) und einem dem Robotergelenk (6.1) nachgelagerten Roboterglied (6.3) aufweist,
wobei die mindestens eine Teilkinematik (6, 7) zur Verstellung der Roboterglieder (6.2, 6.3) zueinander einen Linearantrieb (6.4) mit einem entlang einer Linearachse (6.5) verstellbaren Antriebselement (6.6) und eine Koppel (6.7) mit zwei entlang der Koppelerstreckung voneinander beabstandeten Koppelgelenken (6.8, 6.9) aufweist, wobei der Linearantrieb (6.4) an einem ersten Roboterglied (6.10) der Teilkinematik (6) angeordnet ist und wobei die Koppel (6.7) einerseits an dem Antriebselement (6.6) des Linearantriebs (6.4) und andererseits an dem zweiten, verbleibenden Roboterglied (6.11) der Teilkinematik (6), beabstandet von der geometrischen Achse (6.1a) des Robotergelenks (6.1) der Teilkinematik (6), angelenkt ist,
wobei die Kinematik (2) eine erste Teilkinematik (6) der mindestens einen Teilkinematik (6, 7) und eine zweite Teilkinematik (7) der mindestens einen Teilkinematik (6, 7) aufweist, wobei die zweite Teilkinematik (7) der ersten Teilkinematik (6) nachgelagert ist, wobei das nachgelagerte Roboterglied (6.3) der ersten Teilkinematik (6) gleichzeitig das vorgelagerte Roboterglied (7.2) der zweiten Teilkinematik (7) ist und somit ein gemeinschaftliches Roboterglied (9) der beiden Teilkinematiken (6, 7) bereitstellt, wobei an dem gemeinschaftlichen Roboterglied (9) die Linearantriebe (6.4, 7.4) beider Teilkinematiken (6, 7) angeordnet sind.

2. Knickarmroboter nach Anspruch 1, **dadurch gekennzeichnet, dass** der Linearantrieb (6.4) ein Spindel-Spindelmutter-Antrieb mit einer Spindel (6.13) und einer Spindelmutter (6.14) ist und dass das Antriebselement (6.6) die Spindelmutter (6.14) oder die Spindel (6.13) umfasst, vorzugsweise, dass das System aus Spindel (6.13) und Spindelmutter (6.14) als Kugelrollspindelsystem oder als Planetenrollengewindetriebsystem ausgestaltet ist.

3. Knickarmroboter nach Anspruch 2, **dadurch gekennzeichnet, dass** die Spindel (6.13) so an dem ersten Roboterglied (6.10) der Teilkinematik (6) gelagert ist, dass die geometrische Spindelachse (6.13a) an dem ersten Roboterglied (6.10) der Teilkinematik (6) ortsfest gelegen ist.

4. Knickarmroboter nach Anspruch 2 oder 3, **dadurch gekennzeichnet, dass** die Spindel (6.13) axialfest, aber drehbar an dem ersten Roboterglied (6.10) der Teilkinematik (6) gelagert ist und dass die Spindelmutter (6.14) axial verlagerbar, aber drehfest an dem ersten Roboterglied (6.10) der Teilkinematik (6) gelagert ist, vorzugsweise, dass ein Spindelantrieb (6.15) zum Antrieb der Spindel (6.13) vorgesehen ist, weiter vorzugsweise, dass der Spindelantrieb (6.15) als Servoantrieb ausgestaltet ist.

5. Knickarmroboter nach einem der vorhergehenden Ansprüche, **dadurch gekennzeichnet, dass** an dem ersten Roboterglied (6.10) der Teilkinematik (6), vorzugsweise separat von dem Linearantrieb (6.4), eine Längsführung (6.16) angeordnet ist, mittels der das Antriebselement (6.6) an dem ersten Roboterglied (6.10) in einer Führungsrichtung (6.17) längsgeführt ist, vorzugsweise, dass die Längsführung (6.16) Führungskräfte in allen Richtungen quer zu der Führungsrichtung (6.17) auf das Antriebselement (6.6) ausübt.

6. Knickarmroboter nach einem der vorhergehenden Ansprüche, **dadurch gekennzeichnet, dass** für den statischen Zustand der Teilkinematik (6) das Robotergelenk (6.1) und die beiden Koppelgelenke (6.8, 6.9) zusammen mit der Koppel (6.7) und den jeweiligen Abschnitten der Roboterglieder (6.2, 6.3), die zwischen den Koppelgelenken (6.8, 6.9) und dem Robotergelenk (6.1) gelegen sind, eine Anordnung nach Art eines Stabdreiecks (6.18) ausbilden.

7. Knickarmroboter nach Anspruch 6, **dadurch gekennzeichnet, dass** die dem Stabdreieck (6.18) zugeordneten Kraftwirkungslinien ein Kraftwirkungsdreieck (6.19) ausbilden, dessen Ecken (6.20, 6.21, 6.22) durch das Robotergelenk (6.1) und durch die Koppelgelenke (6.8, 6.9) definiert sind und dessen Innenwinkel in einem Arbeitsbereich des Knickarmroboters, vorzugsweise stets, jeweils größer als 15°, vorzugsweise größer als 20°, weiter vorzugsweise größer als 30°, sind, und/oder, dass der Innenwinkel an dem Koppelgelenk (6.9), das dem Antriebselement (6.6) abgewandt ist, in einem Arbeitsbereich des Knickarmroboters, vorzugsweise stets, weniger als 150°, vorzugsweise weniger als 140°, weiter vorzugsweise weniger als 120° und weiter vorzugsweise weniger als 100° beträgt.

8. Knickarmroboter nach einem der vorhergehenden Ansprüche, **dadurch gekennzeichnet, dass** das vorgelagerte Roboterglied (6.2) gegenüber einem Grundkörper (11) um eine geometrische Positionierachse (10) schwenkbar ist.

9. Knickarmroboter nach einem der vorhergehenden Ansprüche, **dadurch gekennzeichnet, dass** das erste, den Linearantrieb (6.4) aufweisende Roboterglied (6.10) der ersten Teilkinematik (6) gleichzeitig das erste, den Linearantrieb (7.4) aufweisende Roboterglied (7.10) der zweiten Teilkinematik (7) ist und somit das gemeinschaftliche Roboterglied (9) der beiden Teilkinematiken (6, 7) bereitstellt.

10. Knickarmroboter nach einem der vorhergehenden Ansprüche, **dadurch gekennzeichnet, dass** das erste, den Linearantrieb (6.4) aufweisende Roboterglied (6.10) der ersten Teilkinematik (6) dem zweiten Roboterglied (6.11) der ersten Teilkinematik (6) nachgelagert ist und dass das erste, den Linearantrieb (7.4) aufweisende Roboterglied (7.10) der zweiten Teilkinematik (7) dem zweiten Roboterglied (7.11) der zweiten Teilkinematik (7) vorgelagert ist.

11. Knickarmroboter nach einem der vorhergehenden Ansprüche, **dadurch gekennzeichnet, dass** die Linearachsen (6.5, 7.5) der beiden Teilkinematiken (6, 7) beabstandet voneinander, jedoch parallel zueinander, ausgerichtet sind.

12. Knickarmroboter nach einem der vorhergehenden Ansprüche, **dadurch gekennzeichnet, dass** der Endeffektor (3) als Nieteinheit, als Handhabungseinheit oder als Faserlegeeinheit ausgestaltet ist.

## Claims

1. Articulated-arm robot having a serial kinematic mechanism (2) for positioning an end effector (3), wherein the kinematic mechanism (2) has at least one part kinematic mechanism (6, 7) with a robot joint (6.1), with a robot member (6.2) mounted upstream of the robot joint (6.1), and with a robot member (6.3) mounted downstream of the robot joint (6.1),
wherein the at least one part kinematic mechanism (6, 7), for adjusting the robot members (6.2, 6.3) in relation to one another, has a linear drive (6.4) with a drive element (6.6) able to be adjusted along a linear axis (6.5) and has a coupler (6.7) with two coupler joints (6.8, 6.9) which are spaced apart from one another along the coupler extent, wherein the linear drive (6.4) is arranged on a first robot member (6.10) of the part kinematic mechanism (6), and wherein the coupler (6.7) is articulated on the drive element (6.6) of the linear drive (6.4) at one side and on the second, remaining robot member (6.11) of the part kinematic mechanism (6) at the other side so as to be spaced apart from the geometrical axis (6.1a) of the robot joint (6.1) of the part kinematic mechanism (6),
wherein the kinematic mechanism (2) has a first part kinematic mechanism (6) of the at least one part kinematic mechanism (6, 7) and has a second part kinematic mechanism (7) of the at least one part kinematic mechanism (6, 7), wherein the second part kinematic mechanism (7) is mounted downstream of the first part kinematic mechanism (6), wherein that robot member (6.3) of the first part kinematic mechanism (6) which is mounted downstream is simultaneously that robot member (7.2) of the second part kinematic mechanism (7) which is mounted upstream and thus provides a common robot member (9) of the two part kinematic mechanisms (6, 7), wherein the linear drives (6.4, 7.4) of the two part kinematic mechanisms (6, 7) are arranged on the common robot member (9).

2. Articulated-arm robot according to Claim 1, **characterized in that** the linear drive (6.4) is a spindle/spindle nut drive with a spindle (6.13) and with a spindle nut (6.14), and **in that** the drive element (6.6) comprises the spindle nut (6.14) or the spindle (6.13), preferably **in that** the system composed of spindle (6.13) and spindle nut (6.14) is designed as a ball screw system or as a planetary roller screw drive system.

3. Articulated-arm robot according to Claim 2, **characterized in that** the spindle (6.13) is mounted on the first robot member (6.10) of the part kinematic mechanism (6) in such a way that the geometrical spindle axis (6.13a) is situated in a positionally fixed manner at the first robot member (6.10) of the part kinematic mechanism (6).

4. Articulated-arm robot according to Claim 2 or 3, **characterized in that** the spindle (6.13) is mounted in an axially fixed but rotatable manner on the first robot member (6.10) of the part kinematic mechanism (6), and **in that** the spindle nut (6.14) is mounted in an axially displaceable but rotationally fixed manner on the first robot member (6.10) of the part kinematic mechanism (6), preferably **in that** a spindle drive (6.15) for driving the spindle (6.13) is provided, more preferably **in that** the spindle drive (6.15) is designed as a servo drive.

5. Articulated-arm robot according to one of the preceding claims, **characterized in that**, on the first robot member (6.10) of the part kinematic mechanism (6), there is arranged, preferably separately from the linear drive (6.4), a longitudinal guide (6.16) by means of which the drive element (6.6) is guided longitudinally in a guide direction (6.17) on the first robot member (6.10), preferably **in that** the longitudinal guide (6.16) exerts guide forces on the drive element (6.6) in all directions transverse to the guide direction (6.17).

6. Articulated-arm robot according to one of the preceding claims, **characterized in that**, for the static state of the part kinematic mechanism (6), the robot joint (6.1) and the two coupler joints (6.8, 6.9) form together with the coupler (6.7) and the respective sections of the robot members (6.2, 6.3) that are situated between the coupler joints (6,8, 6.9) and the robot joint (6.1) an arrangement in the manner of a bar triangle (6.18).

7. Articulated-arm robot according to Claim 6, **characterized in that** the force action lines associated with the bar triangle (6.18) form a force action triangle (6.19) whose corners (6.20, 6.21, 6.22) are defined by the robot joint (6.1) and by the coupler joints (6.8, 6.9) and whose interior angles, in a working area of the articulated-arm robot, are, preferably at all times, each greater than 15°, preferably greater than 20°, more preferably greater than 30°, and/or **in that** the interior angle at the coupler joint (6.9) which is remote from the drive element (6.6), in a working area of the articulated-arm robot, is, preferably at all times, less than 150°, preferably less than 140°, more preferably less than 120° and more preferably less than 100°.

8. Articulated-arm robot according to one of the preceding claims, **characterized in that** the robot member (6.2) mounted upstream is pivotable about a geometrical positioning axis (10) in relation to a main body (11).

9. Articulated-arm robot according to one of the preceding claims, **characterized in that** the first robot member (6.10), having the linear drive (6.4), of the first part kinematic mechanism (6) is simultaneously the first robot member (7.10), having the linear drive (7.4), of the second part kinematic mechanism (7), and thus provides the common robot member (9) of the two part kinematic mechanisms (6, 7).

10. Articulated-arm robot according to one of the preceding claims, **characterized in that** the first robot member (6.10), having the linear drive (6.4), of the first part kinematic mechanism (6) is mounted downstream of the second robot member (6.11) of the first part kinematic mechanism (6), and **in that** the first robot member (7.10), having the linear drive (7.4), of the second part kinematic mechanism (7) is mounted upstream of the second robot member (7.11) of the second part kinematic mechanism (7).

11. Articulated-arm robot according to one of the preceding claims, **characterized in that** the linear axes (6.5, 7.5) of the two part kinematic mechanisms (6, 7) are oriented spaced apart from one another but parallel to one another.

12. Articulated-arm robot according to one of the preceding claims, **characterized in that** the end effector (3) is designed as a riveting unit, as a handling unit or as a fibre laying unit.

## Revendications

1. Robot à bras articulé comportant une cinématique série (2) servant au positionnement d'un effecteur terminal (3), la cinématique (2) présentant au moins une cinématique partielle (6, 7) comportant une articulation de robot (6.1), comportant un organe de robot (6.2) monté en amont de l'articulation de robot (6.1) et un organe de robot (6.3) monté en aval de l'articulation de robot (6.1),
l'au moins une cinématique partielle (6, 7) présentant, pour le déplacement des organes de robot (6.2, 6.3) l'un par rapport à l'autre, un entraînement linéaire (6.4) comportant un élément d'entraînement (6.6) déplaçable le long d'un axe linéaire (6.5) et une bielle (6.7) comportant deux articulations de bielle (6.8, 6.9) espacées l'une de l'autre le long de l'étendue de bielle, l'entraînement linéaire (6.4) étant disposé au niveau d'un premier organe de robot (6.10) de la cinématique partielle (6) et la bielle (6.7) étant articulée d'un côté sur l'élément d'entraînement (6.6) de l'entraînement linéaire (6.4) et de l'autre côté sur le deuxième organe de robot (6.11) restant de la cinématique partielle (6), de manière espacée de l'axe géométrique (6.1a) de l'articulation de robot (6.1) de la cinématique partielle (6),
la cinématique (2) présentant une première cinématique partielle (6) de l'au moins une cinématique partielle (6, 7) et une deuxième cinématique partielle (7) de l'au moins une cinématique partielle (6, 7), la deuxième cinématique partielle (7) étant montée en aval de la première cinématique partielle (6), l'organe de robot (6.3) monté en aval de la première cinématique partielle (6) étant simultanément l'organe de robot (7.2) monté en aval de la deuxième cinématique partielle (7) et fournissant donc un organe de robot commun (9) des deux cinématiques partielles (6, 7), les entraînements linéaires (6.4, 7.4) des deux cinématiques partielles (6, 7) étant disposés sur l'organe de robot (9) commun.

2. Robot à bras articulé selon la revendication 1, **caractérisé en ce que** l'entraînement linéaire (6.4) est un entraînement à broche-écrou de broche comportant une broche (6.13) et un écrou de broche (6.14) et **en ce que** l'élément d'entraînement (6.6) comprend l'écrou de broche (6.14) ou la broche (6.13), de préférence **en ce que** le système constitué de la broche (6.13) et de l'écrou de broche (6.14) est conçu sous forme de système de vis à billes ou sous forme de système de vis à rouleaux planétaires.

3. Robot à bras articulé selon la revendication 2, **caractérisé en ce que** la broche (6.13) est montée sur le premier organe de robot (6.10) de la cinématique partielle (6) de telle sorte que l'axe de broche géométrique (6.13a) soit placé de manière fixe sur le premier organe de robot (6.10) de la cinématique partielle (6).

4. Robot à bras articulé selon la revendication 2 ou 3, **caractérisé en ce que** la broche (6.13) est montée de manière fixe axialement, mais rotative sur le premier organe de robot (6.10) de la cinématique partielle (6) et **en ce que** l'écrou de broche (6.14) est monté de manière déplaçable axialement, mais solidaire en rotation sur le premier organe de robot (6.10) de la cinématique partielle (6), de préférence **en ce qu'**un entraînement de broche (6.15) servant à l'entraînement de la broche (6.13) est prévu, de préférence encore **en ce que** l'entraînement de broche (6.15) est conçu sous forme de servocommande.

5. Robot à bras articulé selon l'une des revendications précédentes, **caractérisé en ce qu'**un guide longitudinal (6.16) est disposé au niveau du premier organe de robot (6.10) de la cinématique partielle (6), de préférence séparément de l'entraînement linéaire (6.4), guide longitudinal au moyen duquel l'élément d'entraînement (6.6) est guidé longitudinalement sur le premier organe de robot (6.10) dans une direction de guidage (6.17), de préférence **en ce que** le guide longitudinal (6.16) exerce des forces de guidage sur l'élément d'entraînement (6.6) dans toutes les directions transversalement à la direction de guidage (6.17).

6. Robot à bras articulé selon l'une des revendications précédentes, **caractérisé en ce que**, pour l'état statique de la cinématique partielle (6), l'articulation de robot (6.1) et les deux articulations de bielle (6.8, 6.9) forment conjointement avec la bielle (6.7) et les parties respectives des organes de robot (6.2, 6.3), qui sont placées entre les articulations de bielle (6.8, 6.9) et l'articulation de robot (6.1), un agencement à la manière d'une barre triangulaire (6.18).

7. Robot à bras articulé selon la revendication 6, **caractérisé en ce que** les lignes d'action de force associées à la barre triangulaire (6.18) forment un triangle d'action de force (6.19) dont les coins (6.20, 6.21, 6.22) sont définis par l'articulation de robot (6.1) et par les articulations de bielle (6.8, 6.9) et dont les angles intérieurs sont, de préférence constamment, respectivement supérieurs à 15°, de préférence supérieurs à 20°, de préférence encore supérieurs à 30°, dans une région de travail du robot à bras articulé, et/ou **en ce que** l'angle intérieur au niveau de l'articulation de bielle (6.9) qui est opposée à l'élément d'entraînement (6.6) vaut, de préférence constamment, moins de 150°, de préférence moins de 140°, de préférence encore moins de 120° et idéalement moins de 100° dans une région de travail du robot à bras articulé.

8. Robot à bras articulé selon l'une des revendications précédentes, **caractérisé en ce que** l'organe de robot monté en amont (6.2) peut être pivoté autour d'un axe de positionnement géométrique (10) par rapport à un corps de base (11).

9. Robot à bras articulé selon l'une des revendications précédentes, **caractérisé en ce que** le premier organe de robot (6.10) présentant l'entraînement linéaire (6.4) de la première cinématique partielle (6) fournit simultanément le premier organe de robot (7.10) présentant l'entraînement linéaire (7.4) de la deuxième cinématique partielle (7) et fournit donc l'organe de robot commun (9) des deux cinématiques partielles (6, 7).

10. Robot à bras articulé selon l'une des revendications précédentes, **caractérisé en ce que** le premier organe de robot (6.10) présentant l'entraînement linéaire (6.4) de la première cinématique partielle (6) est monté en aval du deuxième organe de robot (6.11) de la première cinématique partielle (6) et **en ce que** le premier organe de robot (7.10) présentant l'entraînement linéaire (7.4) de la deuxième cinématique partielle (7) est monté en aval du deuxième organe de robot (7.11) de la deuxième cinématique partielle (7).

11. Robot à bras articulé selon l'une des revendications précédentes, **caractérisé en ce que** les axes linéaires (6.5, 7.5) des deux cinématiques partielles (6, 7) sont orientés de manière espacée l'un de l'autre mais parallèlement l'un à l'autre.

12. Robot à bras articulé selon l'une des revendications précédentes, **caractérisé en ce que** l'effecteur terminal (3) est conçu sous forme d'unité de rivetage, sous forme d'unité de manipulation ou sous forme d'unité de dépôt de fibres.
